# EUROPÄISCHE PATENTSCHRIFT

(11) **EP 1 286 443 B1**
(45) Veröffentlichungstag und Bekanntmachung des Hinweises auf die Patenterteilung: **26.10.2005**
(21) Anmeldenummer: 02405685.5
(22) Anmeldetag: 12.08.2002
(51) Int. Cl.: H02G 3/30

(54) **Kabelhalter**
Cable holder
Porte-câbles

(30) Priorität: 22.08.2001 DE 10140195
(43) Veröffentlichungstag der Anmeldung: 26.02.2003
(73) Patentinhaber: HILTI Aktiengesellschaft, 9494 Schaan (LI)
(72) Erfinder: Miescher, Stefan, 9494 Schaan (LI); Kluser, Remo, 9452 Hinterforst (CH); Boes, Stefan, 76761 Waldshut-Tiengen (DE)
(74) Vertreter: Wildi, Roland

(56) Entgegenhaltungen:
- GB-A- 2 218 462
- US-A- 3 323 766

## Beschreibung

Die Erfindung betrifft ein Befestigungselement aus Bandmaterial zum Abhängen von länglichen Gegenständen, wie beispielsweise Kabel, Rohre oder dergleichen, an Decken und dergleichen mit einem, mit der Decke in Kontakt bringbaren, abgewinkelten Befestigungsteil und einem, diesem gegenüberliegenden, im wesentlichen hakenförmig ausgebildeten, Aufnahmeteil.

Befestigungselemente der oben genannten Art, dienen dem Abhängen von beispielsweise Rohren oder Kabeln. Das aus Bandmaterial bestehende Befestigungselement weist einen Befestigungsteil und einen Aufnahmeteil auf. Der Aufnahmeteil ist im wesentlichen hakenförmig ausgebildet, um die abzuhängenden Gegenstände aufzunehmen, die durch die Gewichtskraft in den Aufnahmeteil gedrückt werden. Der Befestigungsteil dient zum Befestigen des Befestigungselements, beispielsweise an einer Decke. Als Befestigungsmittel können beispielsweise Dübel Anwendung finden, die beispielsweise das Befestigungsteil durch eine Durchgangsbohrung an der Decke festlegen. Eine andere Möglichkeit der Befestigung besteht beispielsweise darin, mittels eines pulverbetriebenen Setzgerätes einen Nagel durch das Befestigungsteil in die Decke zu setzen.

Aus der US3,323,766 ist ein Befestigungselement mit einem Befestigungsteil und einem dem diesem gegenüberliegenden Aufnahmeteil bekannt. Das Befestigungsteil weist eine Durchgangsbohrung auf, mittels der das Befestigungselement beispielsweise durch eine Schraubverbindung an beispielsweise einer Decke oder einem Schienensystem festlegbar ist.

Vorteilhaft an dieser bekannten Lösung ist, dass das Befestigungsteil dem Aufnahmeteil gegenüberliegt. Dadurch wird eine Hebelwirkung zwischen einer auf den Aufnahmeteil wirkenden Last und dem Befestigungsteil, insbesondere einem das Befestigungsteil an einer Decke befestigende Befestigungsmittel verhindert und damit durch eine optimale Lastverteilung hohe Lastwerte des Befestigungselements gewährleistet.

Nachteilig an der bekannten Lösung ist die Zugänglichkeit des Befestigungselements zum Befestigungsteil. Durch das dem Befestigungsteil gegenüberliegend angeordnete Aufnahmeteil wird das Befestigen des Befestigungselements mittels des Befestigungsteils an der Deck in einem hohen Masse erschwert bis gar verunmöglicht, insbesondere bei einer Anwendung eines pulverbetriebenen Setzgeräts.

Der vorliegenden Erfindung liegt die Aufgabe zugrunde, ein Befestigungselement zu schaffen, das hohe Lastwerte sicherstellt und ferner handlich zu befestigen ist.

Erfindungsgemäss wird die Aufgabe dadurch gelöst, dass das Aufnahmeteil gegenüber dem Befestigungsteil verschwenkbar ist, wobei das Aufnahmeteil in der verschwenkten Position zumindest teilweise ausserhalb der senkrecht zur Ebene des Befestigungsteils verlaufenden Projektion des Befestigungsteils liegt.

Dadurch, dass das Aufnahmeteil gegenüber dem Befestigungsteil verschwenkbar ist, ist eine optimale Zugänglichkeit zum Befestigungsteil gewährleistet. Das Aufnahmeteil wird gegenüber dem Befestigungsteil soweit verschenkt, bis eine ausreichende Zugänglichkeit beispielsweise für ein Setzwerkzeug oder insbesondere ein pulverbetriebenes Setzgerät zum Setzen des Befestigungsmittels vorliegt. Ist das Befestigungsteil beispielsweise an einer Decke befestigt, wird das Aufnahmeteil gegenüber dem Befestigungsteil in die unverschwenkte Position zurückbewegt, in der das Aufnahmeteil gegenüber dem Befestigungsteil liegt. In der unverschwenkten Position werden die abzuhängenden Gegenstände in das Aufnahmeteil gegeben. Dadurch, dass die Last im wesentlichen ohne Hebelwirkung auf das Befestigungsteil wirkt, sind hohe Lastwerte des Befestigungselements sichergestellt.

Das Aufnahmeteil ist vorzugsweise um eine Schwenkachse, die parallel zur Ebene des Befestigungsteils verläuft, verschwenkbar, um ein hohes Mass an Handlichkeit zu gewährleisten. Ferner wirkt sich diese Ausführung positiv auf die Wirtschaftlichkeit der Herstellung des Befestigungselements aus. Je nach Rahmenbedingungen für das Befestigungselement kann beispielsweise auch eine senkrecht zur Ebene des Befestigungsteils verlaufende Schwenkachse Anwendung finden.

Vorteilhafterweise überlappen sich das Aufnahmeteil und das Befestigungsteil zumindest im Bereich der Schwenkachse, um im Bereich der Schwenkachse eine hohe Stabilität sicherzustellen.

Vorzugsweise weisen das Aufnahmeteil und das Befestigungsteil eine Rastvorrichtung auf, um das Aufnahmeteil gegenüber dem Befestigungsteil, zumindest in einer Position, lösbar festzulegen.

Vorteilhafterweise weist die Rastvorrichtung eine Ausnehmung und eine, in die Ausnehmung bringbare, Eingriffszunge auf, wobei das eine Teil die Ausnehmung und das andere Teil die Eingriffszunge aufweist. Durch die konstruktiv einfache Lösung ist eine wirtschaftlich herstellbare und leicht zu bedienende Rastvorrichtung sichergestellt. Ist es in einem Anwendungsgebiet beispielsweise vorteilhaft das Aufnahmeteil gegenüber dem Befestigungsteil in mehreren Positionen lösbar festzulegen, so ist dies beispielsweise durch Anbringen mehrer Ausnehmungen umsetzbar.

Die Rastvorrichtung tritt vorzugsweise zumindest in unverschwenkter Position des Aufnahmeteils gegenüber dem Befestigungsteil in Funktion, um ein unerwünschtes Verschwenken der beiden Teil gegeneinander mit einer Last zu verhindern. Insbesondere falls die Rahmenbedingungen eine dynamische Belastung vorsehen, erweist sich ein Festlegen der beiden Teile gegeneinander als vorteilhaft.

Die Erfindung wird nachstehend anhand eines Ausführungsbeispieles näher erläutert. Es zeigen:
- Fig. 1: Eine Seitenansicht eines erfindungsgemässen Befestigungselements in der unverschwenkten Position;
- Fig.2: das in Fig. 1 dargestellte Befestigungselement um 90° verdreht, in einer verschwenkten Position mit einem Setzgerät;
- Fig. 3: eine vergrösserte perspektivische Ansicht des in Fig. 1 dargestellten Befestigungselements.

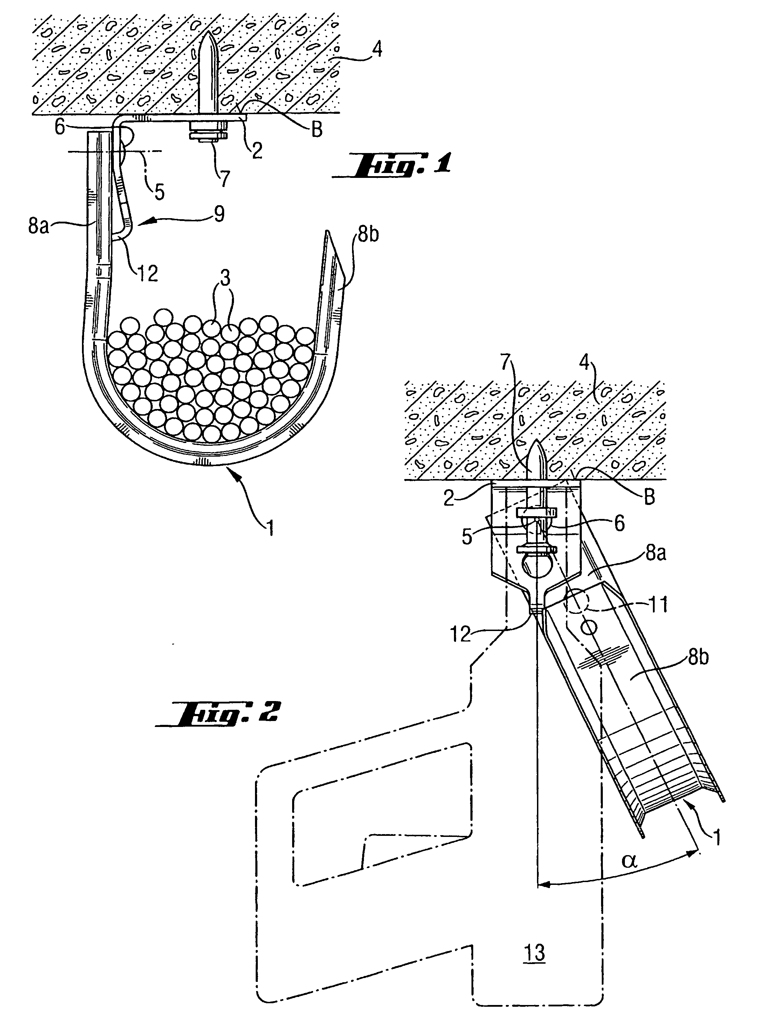

In den Fig. 1 bis 3 ist ein erfindungsgemässes Befestigungselement zu Abhängen von beispielsweise Kabeln 3 von einer Decke 4 mit einem, mit der Decke 4 in Kontakt bringbaren, abgewinkelten Befestigungsteil 2 und einem, diesem gegenüberliegenden und im wesentlichen hakenförmig ausgebildeten Aufnahmeteil 1, dargestellt. Das Aufnahmeteil 1 ist um eine Schwenkachse 5 gegenüber dem Befestigungsteil 2 verschwenkbar, wobei das Befestigungsteil 2 zumindest teilweise in einer verschwenkten Position, wie insbesondere aus Fig. 2 ersichtlich ist, ausserhalb der senkrecht zur Ebene B des Befestigungsteils 2 verlaufenden Projektion des Aufnahmeteils 1 liegt.

Das abgewinkelte Befestigungsteil 2 steht mit der Decke 4 in Kontakt und weist etwa mittig eine senkrecht zur Ebene B des Befestigungsteils 2 verlaufende Durchgangsbohrung zur Aufnahme eines Befestigungsmittels 7 auf.

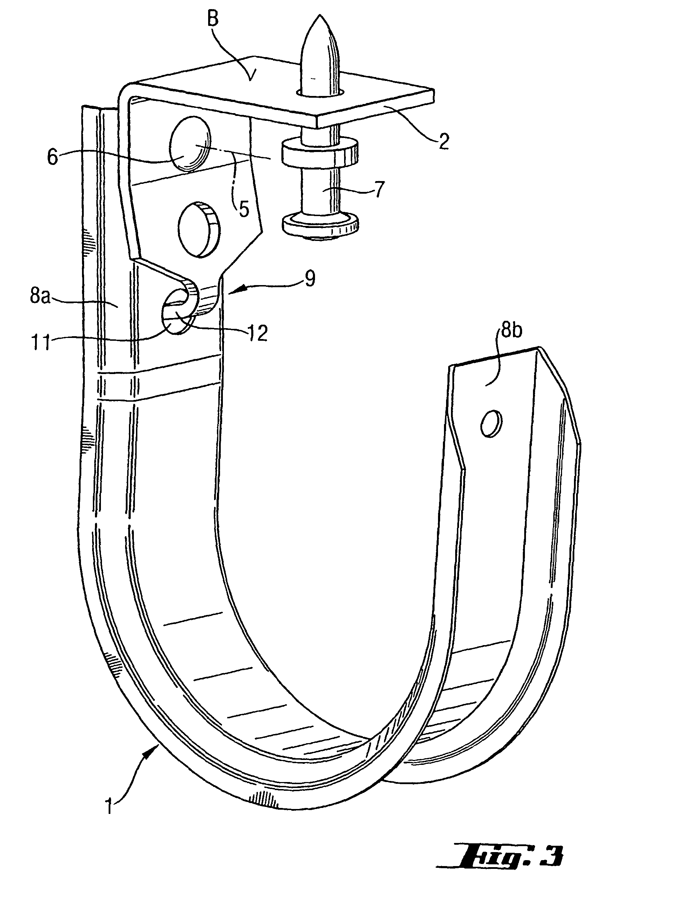

Das im wesentlichen hakenförmige Aufnahmeteil 1 weist einen U-förmigen Querschnitt auf, wie dies insbesondere aus Fig. 3 ersichtlich ist. Eines der beiden freien Längsenden 8a, 8b des Aufnahmeteils 1 ist durch eine, parallel zur Ebene B des Befestigungsteils 2 durch die Schwenkachse 5 verlaufende Niete 6 verschwenkbar mit dem Befestigungsteil 2 verbunden. Im Bereich der Schwenkachse 5 überlappen sich das Befestigungsteil 2 und das Aufnahmeteil 1 teilweise.

Das Aufnahmeteil 1 und das Befestigungsteil 2 weisen eine, insgesamt mit 9 bezeichnete, Rastvorrichtung auf, die am Aufnahmeteil 1 eine Ausnehmung 11 und am Befestigungsteil 2 eine, in die Ausnehmung 11 bringbare, federnd ausgebildete Eingriffszunge 12 aufweist. Die Rastvorrichtung 9 verhindert ein Verschwenken des Aufnahmeteils 1 gegenüber dem Befestigungsteil 2 in einer, in Fig. 1 und 3 dargestellten, Endposition. In dieser Position greift die Eingriffszunge in die Ausnehmung 11 und verbindet dadurch das Aufnahmeteil 1 mit dem Befestigungsteil 2 lösbar miteinander.

Fig. 2 zeigt das erfindungsgemässe Befestigungselement in verschwenkter Position mit einem schematisch dargestellten, zur Befestigung des Befestigungsteils zur Anwendung gelangenden, pulverbetriebenen Setzgerät 13. Um mit dem Setzgerät 13 des einzutreibenden Befestigungsmittels 7, insbesondere einen Nagel, an der vorgesehenen Position des Befestigungsteils 2 zu platzieren, ist das Aufnahmeteil 1 gegenüber dem Befestigungsteil 2 um einen Winkel α um die Schwenkachse 5 verschwenkt. Die Rastvorrichtung 9 ist nicht im Eingriff, das heisst die Eingriffszunge 12 ist ausserhalb der Ausnehmung 11. Beim dem Eintriebvorgang des Setzgeräts 13 drückt das Befestigungsmittel 7 den Befestigungsteil 2 an die Decke 4, damit ist das Befestigungselement an der Decke befestigt. Anschliessend wird das Aufnahmeteil 1 in die Endposition zurückgeschwenkt, wie dies die Fig.1 und 3 zeigen. In dieser Position werden ein oder mehre längliche Gegenstände in das Aufnahmeteil 1 gelegt. Die Eingriffszunge 12 greift in die Ausnehmung 11 und verhindert damit ein Verschwenken der beiden Teile gegeneinander.

## Patentansprüche

1. Befestigungselement aus Bandmaterial zum Abhängen von länglichen Gegenständen, wie beispielsweise Kabel (3), Rohre oder dergleichen, an Decken (4) und dergleichen mit einem, mit der Decke (4) in Kontakt bringbaren, abgewinkelten Befestigungsteil (2) und einem, diesem gegenüberliegenden, im wesentlichen hakenförmig ausgebildeten, Aufnahmeteil (1), **dadurch gekennzeichnet, dass** das Aufnahmeteil (1) gegenüber dem Befestigungsteil (2) verschwenkbar ist, wobei das Aufnahmeteil (1) in der verschwenkten Position zumindest teilweise ausserhalb der senkrecht zur Ebene (B) des Befestigungsteils (2) verlaufenden Projektion des Befestigungsteils (2) liegt.

2. Befestigungselement nach Anspruch 1, **dadurch gekennzeichnet, dass** das Aufnahmeteil (1) um eine Schwenkachse (5), die parallel zur Ebene (B) des Befestigungsteils (2) verläuft, verschwenkbar ist.

3. Befestigungselement nach Anspruch 2, **dadurch gekennzeichnet, dass** sich das Aufnahmeteil (1) und das Befestigungsteil (2) zumindest im Bereich der Schwenkachse (5) überlappen.

4. Befestigungselement nach einem der Ansprüche 1 bis 3, **dadurch gekennzeichnet, dass** das Aufnahmeteil (1) und das Befestigungsteil (2) eine Rastvorrichtung (9) aufweisen.

5. Befestigungselement nach einem der Ansprüche 1 bis 4, **dadurch gekennzeichnet, dass** die Rastvorrichtung (9) eine Ausnehmung (11) und eine, in die Ausnehmung (11) bringbare, Eingriffszunge (12) aufweist, wobei das eine Teil (1, 2) die Ausnehmung (11) und das andere Teil (1, 2) die Eingriffszunge (12) aufweist.

6. Befestigungselement nach Anspruch 4 oder 5, **dadurch gekennzeichnet, dass** die Rastvorrichtung (9) zumindest in unverschwenkter Position des Aufnahmeteils (1) gegenüber dem Befestigungsteil (2) in Funktion tritt.

## Claims

1. Fixing element of strap material for hanging elongated items, for example cables (3), pipe or the like, on ceilings (4) and the like, comprising an angled fixing section (2) for contact with the ceiling (4), and opposite thereto an essentially hookshaped receiving element (1), **characterised in that** the receiving element (1) is pivotal relative to the fixing section (2), and the receiving element (1) in the pivoted position lies at least partially outside the projection of the fixing section (2) which extends vertically to the plane (B) of the fixing section.

2. Fixing element according to Claim 1, **characterised in that** the receiving element (1) is pivotal around a pivotal axis (5) which extends parallel with the plane (B) of the fixing section (2).

3. Fixing element according to Claim 2, **characterised in that** the receiving element (1) and the fixing section (2) overlap at least in the area of the pivotal axis (5).

4. Fixing element according to one of Claims 1 to 3, **characterised in that** the receiving element (1) and the fixing section (2) comprise a detenting device (9).

5. Fixing element according to one of Claims 1 to 4, **characterised in that** the detenting device (9) comprises a cutout (11) and an engaging tongue (12) which can be placed in the cutout (11), and the one section (1, 2) comprises the cutout (11), and the other part (1, 2) comprises the engaging tongue (12).

6. Fixing element according to Claim 4 or 5, **characterised in that** the detenting device (9) becomes functional relative to the fixing section (2) at least in a non pivoted position of the receiving element.

## Revendications

1. Élément de fixation en matériau en bande pour la suspension d'objets allongés, comme par exemple des câbles (3), des tubes ou analogues, à des plafonds (4) et analogues, avec une partie de fixation coudée (2) pouvant être mise en contact avec le plafond (4) et avec une partie réceptrice (1) située à l'opposé de celle-ci et conformée sensiblement en crochet, **caractérisé en ce que** la partie réceptrice (1) est pivotante par rapport à la partie de fixation (2), la partie réceptrice (1) se trouvant, en position pivotée, au moins partiellement à l'extérieur de la projection de la partie de fixation (2) perpendiculairement au plan (B) de la partie de fixation (2).

2. Élément de fixation selon la revendication 1, **caractérisé en ce que** la partie réceptrice (1) peut pivoter autour d'un axe de pivotement (5) qui s'étend parallèlement au plan (B) de la partie de fixation (2).

3. Élément de fixation selon la revendication 2, **caractérisé en ce que** la partie réceptrice (1) et la partie de fixation (2) se chevauchent au moins dans la zone de l'axe de pivotement (5).

4. Élément de fixation selon une des revendications 1 à 3, **caractérisé en ce que** la partie réceptrice (1) et la partie de fixation (2) comportent un dispositif d'encliquetage (9).

5. Élément de fixation selon une des revendications 1 à 4, **caractérisé en ce que** le dispositif d'encliquetage (9) comporte un évidement (11) et une languette de blocage (12) pouvant être engagée dans l'évidement (11), l'une des parties (1, 2) comportant l'évidement (11) et l'autre partie (1, 2) la languette de blocage (12).

6. Élément de fixation selon la revendication 4 ou 5, **caractérisé en ce que** le dispositif d'encliquetage (9) entre en fonction au moins dans la position non pivotée de la partie réceptrice (1) par rapport à la partie de fixation (2).
